# FASCICULE DE BREVET EUROPEEN

(11) **EP 0 802 870 B1**
(45) Date de publication et mention de la délivrance du brevet: **01.09.1999**
(21) Numéro de dépôt: 95942260.1
(22) Date de dépôt: 13.12.1995
(51) Int. Cl.: B60T 13/57

(54) **SERVOMOTEUR PNEUMATIQUE D'ASSISTANCE AU FREINAGE A CLAPET SOUPLE**
PNEUMATISCHER BREMSKRAFTVERSTÄRKER MIT ELASTISCHEM VENTIL
PNEUMATIC BRAKE SERVO WITH A FLEXIBLE VALVE

(30) Priorité: 18.01.1995 FR 9500488
(43) Date de publication de la demande: 29.10.1997
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR)
(74) Mandataire: Bentz, Jean-Paul
(86) Numéro de dépôt international: FR9501663
(87) Numéro de publication internationale: WO9622210

(56) Documents cités:
- FR-A- 2 648 772
- FR-A- 2 706 543
- US-A- 4 399 736

## Description

La présente invention concerne les servomoteurs pneumatiques, du type de ceux qui sont utilisés pour fournir une assistance au freinage des véhicules automobiles.

De tels servomoteurs sont bien connus dans la technique automobile et comportent de façon classique une enveloppe possédant un axe de symétrie, séparée de façon étanche par une structure de paroi mobile en une chambre avant reliée en permanence à une source de basse pression, et une chambre arrière reliée sélectivement à la chambre avant ou à une source de haute pression par un moyen de valve à trois voies actionnée par une tige de commande susceptible de s'appuyer, par l'intermédiaire de la face avant d'un plongeur, sur la face arrière d'une tige de poussée solidaire d'un disque de réaction, le plongeur coulissant dans un alésage de la paroi mobile, la valve à trois voies comportant un élément de clapet disposé dans une partie arrière tubulaire de la paroi mobile et coopérant par une première zone d'une face avant annulaire avec un premier siège annulaire de clapet formé sur le plongeur et par une seconde zone de la face avant annulaire avec un second siège annulaire de clapet formé sur la paroi mobile, le premier siège de clapet étant concentrique au second siège de clapet et de diamètre inférieur, la face avant annulaire de l'élément de clapet étant sollicitée en direction des sièges annulaires de clapet par un ressort de clapet et étant renforcée par un insert annulaire rigide.

De plus, la tige de commande est rappelée dans sa position arrière de repos par un ressort de tige, prenant appui sur une coupelle solidaire de la partie arrière tubulaire, cette position de repos étant définie par un organe de butée solidaire de la paroi mobile, sur lequel un épaulement du plongeur vient en appui.

La fabrication en série de ces servomoteurs impose de prévoir des tolérances de fabrication, en particulier pour l'alésage de la paroi mobile dans lequel coulisse le plongeur et pour le plongeur lui-même, de façon à ce qu'il puisse coulisser librement dans cet alésage, ainsi que pour le ressort de clapet et pour l'organe de butée.

Il résulte de la combinaison de ces facteurs que le plongeur ne coulisse pas dans l'alésage de la paroi mobile en restant parfaitement parallèle à lui-même. Les axes de l'alésage et du plongeur peuvent ainsi former un angle pouvant atteindre 1 à 2 degrés, en fonction des frottements et des couples de rotation auxquels sont soumis le plongeur et la tige de commande. Corrélativement, les plans dans lesquels sont formés les premier et second sièges annulaires de clapet peuvent former entre eux, lors du mouvement du plongeur, un angle de la même valeur.

Il s'ensuit que l'étanchéité entre la face avant annulaire de l'élément de clapet et au moins un des sièges annulaires de clapet n'est pas assurée dans les meilleures conditions. Lors du fonctionnement du servomoteur, pour un effort donné sur la tige de commande résultant théoriquement en une position d'équilibre, il peut arriver que, selon la configuration respective des sièges de clapet, le servomoteur présente une fuite entre la source de haute pression et la chambre avant ou la chambre arrière du servomoteur, et donc que l'effort de sortie du servomoteur ne corresponde pas à celui qui est attendu en fonction de l'effort d'entrée.

Une solution connue pour résoudre ce problème consiste à augmenter la précontrainte au repos et/ou la raideur du ressort de clapet. Cette solution présente toutefois l'inconvénient d'augmenter de façon importante l'hystérésis du servomoteur.

Une autre solution, connue par exemple du document FR-A-2 560 135, consiste à munir la face avant annulaire de l'élément de clapet de saillies concentriques dont chacune se présente sous la forme d'un tore coupé transversalement par rapport à son axe de rotation, les axes de rotation respectifs coïncidant avec l'axe longitudinal de l'élément de clapet. Une telle solution présente divers inconvénients: la course morte du servomoteur se trouve augmentée dans des proportions importantes, le saut du servomoteur, qui constitue un des paramètres les plus importants du fonctionnement des servomoteurs, ne peut plus être maîtrisé dans des conditions satisfaisantes, et les frottements parasites induits par la forme particulière de la face avant de l'élément de clapet contribuent également à augmenter l'hystérésis du servomoteur.

On connaît également du document US-A-4 399 736 correspondant au préambule de la revendication principale, une solution à ce problème, selon laquelle un élément de clapet est renforcé par un insert annulaire rigide disposé axialement en arrière du premier siège annulaire de clapet formé sur le plongeur. La partie extérieure de l'élément de clapet disposée en arrière du siège annulaire de clapet formée sur la paroi mobile est dépourvue d'insert. Un sillon ou une rainure est formée sur l'élément de clapet, à l'avant ou à l'arrière de la face avant de ce dernier, dans sa partie située entre les deux sièges annulaires de clapet, pour procurer une certaine flexibilité à la partie externe de l'élément de clapet.

Cette solution souffre elle aussi de l'inconvénient de présenter une course morte importante. En effet, étant donnée l'élasticité importante de la partie extérieure de la face avant de l'élément de clapet, il en résulte également une déformation importante de cette face avant, et il est pratiquement impossible d'obtenir l'ouverture d'un des passages de valve immédiatement consécutive à la fermeture de l'autre passage de valve.

La présente invention se place dans ce contexte et a pour objet de proposer un servomoteur dans lequel l'étanchéité entre la face avant annulaire de l'élément de clapet et chaque siège de clapet soit assurée quelles que soient les tolérances de fabrication des divers composants du servomoteur, et quelle que soit la position angulaire du plongeur dans l'alésage permise par ces tolérances, cette étanchéité améliorée étant obtenue sans dégrader par ailleurs les autres performances ou caractéristiques du servomoteur.

Dans ce but, la présente invention prévoit que la face avant annulaire de l'élément de clapet soit renforcée par un second insert annulaire rigide situé axialement en arrière de la seconde zone annulaire de la face avant annulaire de l'élément de clapet coopérant avec le second siège annulaire de clapet, et qu'elle comporte une zone annulaire intermédiaire élastiquement déformable située entre les première et seconde zones annulaires par lesquelles la face avant annulaire de l'élément de clapet coopère avec les sièges annulaires de clapet.

De la sorte, chaque zone annulaire de la face avant annulaire de l'élément de clapet pourra assurer l'étanchéité avec le siège annulaire de clapet correspondant, quel que soit l'angle entre les plans contenant ces sièges annulaires, grâce à l'élasticité de cette zone intermédiaire déformable.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue de côté, en coupe longitudinale, de la partie centrale arrière d'un servomoteur pneumatique d'assistance au freinage, réalisé conformément à la présente invention;
- La Figure 1A représente une demi-vue agrandie de l'élément de clapet de la Figure 1;
- La Figure 2 représente une vue de côté, en coupe longitudinale, de la partie centrale arrière d'un servomoteur pneumatique d'assistance au freinage, réalisé conformément à un second mode de réalisation de la présente invention, et
- La Figure 2A représente une demi-vue agrandie de l'élément de clapet de la Figure 2.

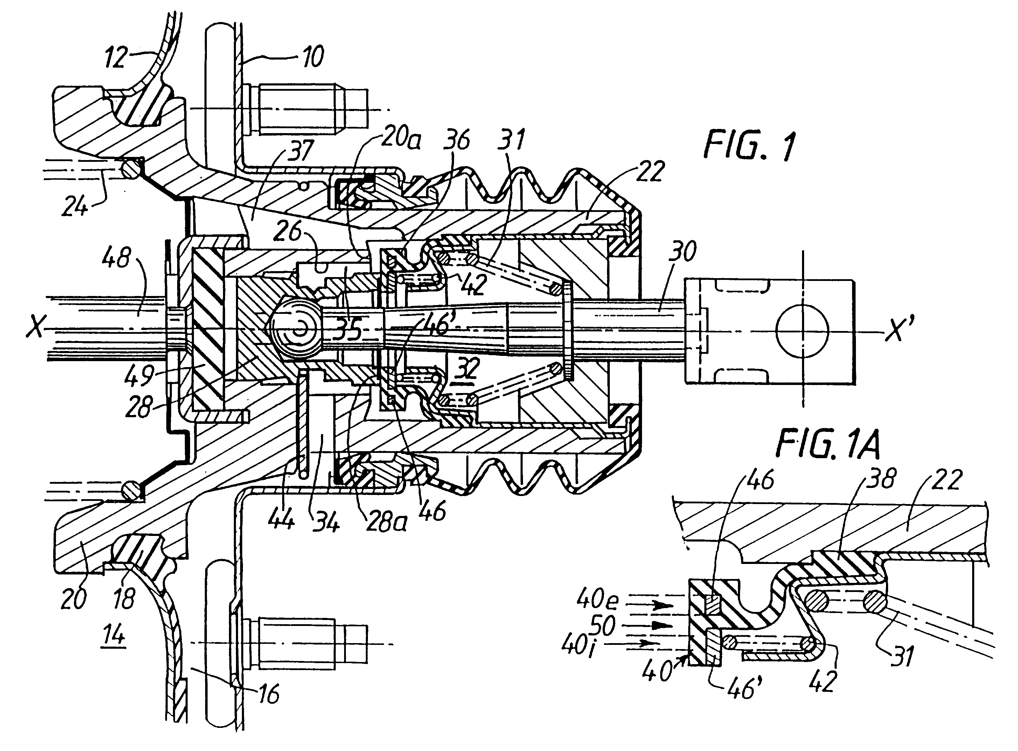

La Figure 1 représente une vue en coupe la partie centrale arrière d'un servomoteur pneumatique d'assistance au freinage prévu pour être placé de façon conventionnelle entre la pédale de frein d'un véhicule et la maître-cylindre commandant la pression dans le circuit de freinage hydraulique de ce véhicule.

Par convention, on appelle "avant" du servomoteur la partie de ce dernier tournée vers le maître-cylindre et "arrière" du servomoteur la partie tournée vers la pédale de frein. Sur les Figures, l'avant est ainsi à gauche et l'arrière à droite.

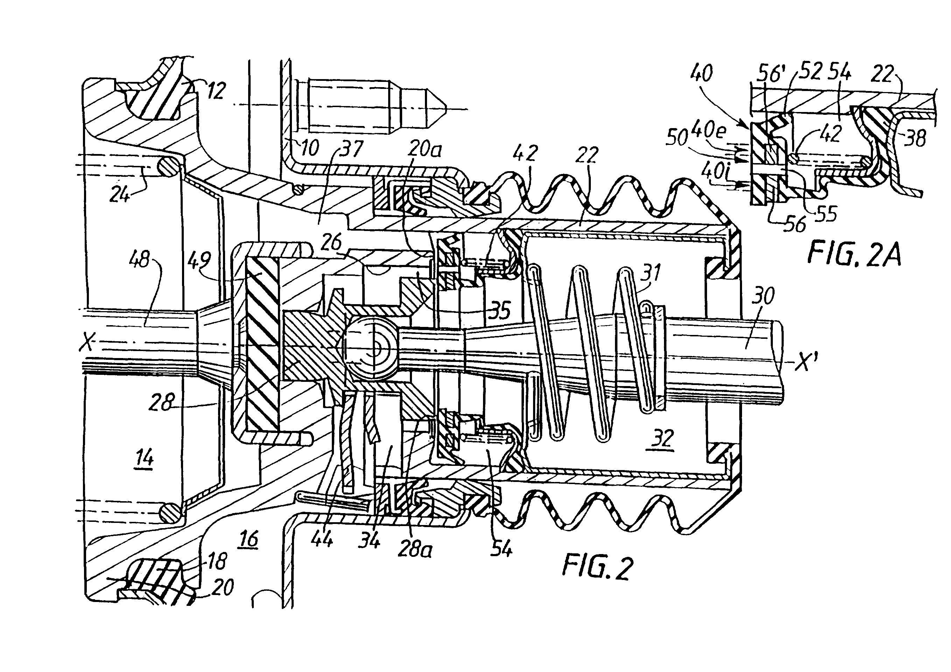

Le servomoteur représenté sur les Figures 1 et 2 comprend un enveloppe extérieure 10 en forme de coquille, présentant une symétrie de révolution autour d'un axe X-X'. Seule la partie centrale arrière de cette enveloppe 10 est représentée sur les Figures 1 et 2.

Une structure de paroi mobile 12 délimite à l'intérieur de l'enveloppe 10 une chambre avant 14 et une chambre arrière 16. La paroi mobile 12 est associée à une membrane déroulante souple en élastomère dont le bord périphérique intérieur est reçu de façon étanche grâce à un bourrelet 18 dans un piston creux d'assistance 20 disposé selon l'axe X-X' du servomoteur, et dont le bord périphérique extérieur (non représenté) est fixé de façon étanche sur l'enveloppe extérieure 10.

Le piston creux 20 se prolonge vers l'arrière sous la forme d'une partie tubulaire 22 qui traverse de façon étanche la paroi arrière de l'enveloppe 10. Un ressort de compression 24 interposé entre le piston 20 et la paroi avant (non représentée) de l'enveloppe 10 maintient normalement le piston 20 dans la position arrière de repos illustrée sur les Figures, dans laquelle la chambre arrière 16 présente son volume minimal et la chambre avant 14 son volume maximal.

Dans la partie centrale de la paroi mobile située en avant de la partie tubulaire arrière 22, le piston 20 présente un alésage 26 dans lequel est reçu en coulissement un plongeur 28. L'extrémité avant d'une tige de commande 30 du servomoteur, disposée également selon l'axe X-X', est montée rotulante dans un alésage borgne du plongeur 28.

L'extrémité arrière de la tige de commande 30, qui fait saillie à l'extérieur de la partie tubulaire 22, est commandée directement par la pédale de frein du véhicule (non représentée), et est rappelée dans sa position de repos par un ressort de rappel 31.

L'espace annulaire 32 autour de la tige de commande 30 peut communiquer avec la chambre arrière 16 au travers d'un passage radial 34 formé dans la partie centrale du piston 20, lorsque des moyens d'assistance commandés par le plongeur 28 sont actionnés.

De façon connue par exemple par les documents précités, ces moyens d'assistance comprennent une valve à trois voies comportant un clapet annulaire 36 et deux sièges de clapet annulaires concentriques 20a et 28a formés respectivement à l'arrière de la partie centrale du piston 20 et à l'arrière du plongeur 28, le siège 28a étant de diamètre inférieur à celui du siège 20a, un espace 35 étant ménagé entre ces deux sièges et communiquant avec le passage radial 34.

Le clapet 36 constitue l'extrémité avant, de plus petit diamètre, d'un manchon tubulaire souple en élastomère dont l'extrémité arrière 38 (Figure 1A) est fixée de façon étanche dans la partie tubulaire 22, et il présente une face avant annulaire 40 mobile suivant l'axe X-X', cette face avant étant sollicitée vers l'avant par un ressort de clapet 42 pour faire coopérer séparément ou en combinaison une zone annulaire extérieure 40e avec le siège de clapet 20a et une zone annulaire intérieure 40i avec le siège de clapet 28a.

D'une manière classique, selon la position du plongeur 28 à l'intérieur de l'alésage 26, l'un des passages de valve 20a-40e ou 28a-40i est ouvert soit pour faire communiquer l'espace annulaire 32 avec le passage radial 34 lors d'une action de freinage, soit pour faire communiquer l'espace 35 avec un passage sensiblement axial 37 formé dans la partie centrale du piston 20 et débouchant dans la chambre avant 14 lors du retour du servomoteur en position de repos.

Enfin, au moins un organe de butée 44 monté dans la partie centrale du piston 20 délimite la course axiale du plongeur 28 à l'intérieur de l'alésage 26. Le plongeur 28 est normalement maintenu dans sa position arrière de repos définie par l'organe 44 au moyen du ressort de rappel 31.

On comprend donc que, comme on l'a expliqué plus haut, sous l'effet des couples de rotation et frottements divers auxquels peuvent être soumis les différents éléments mobiles composant le servomoteur, le plongeur 28 pourra adopter n'importe quelle position dans l'alésage 26 permise par les tolérances de fabrication de ces éléments.

Par exemple, au repos, le plongeur 28 est en butée sur l'organe 44 et la tige de commande 30 est soumise à l'action du ressort 31, de sorte que le plongeur 28 est soumis à un couple de rotation et a tendance à se mettre en biais dans l'alésage 26. Sur la Figure 1, il a ainsi tendance à tourner dans le sens des aiguilles d'une montre.

De même, lors du fonctionnement, l'effort transmis par la tige de commande 30 n'étant pas dirigé selon l'axe X-X' du fait du montage à levier de la pédale de frein, le plongeur n'aura pas forcément son axe de symétrie confondu avec l'axe X-X' du servomoteur.

Il en résulte donc que les sièges de clapet 20a et 28a sont alors inscrits dans des plans qui forment entre eux un certain angle, et que l'étanchéité entre la face avant annulaire 40 et les sièges de clapet 20a et 28a ne peut être garantie qu'en donnant au ressort de clapet 42 une précontrainte au repos et/ou une raideur relativement importante.

Conformément à la présente invention, et comme on l'a représenté sur les Figures, cet inconvénient est évité en prévoyant de munir le clapet d'une zone annulaire intermédiaire élastiquement déformable 50 située entre les première 40i et seconde 40e zones annulaires par lesquelles la face avant annulaire 40 de l'élément de clapet 36 coopère avec les sièges annulaires de clapet.

Selon le mode de réalisation des Figures 1 et 1A, l'invention prévoit de munir le clapet 36 d'un insert annulaire rigide 46 pour renforcer la face avant annulaire 40, en arrière de la zone annulaire 40e coopérant avec le siège de clapet 20a et d'un second insert rigide annulaire 46' situé axialement en arrière de l'autre zone annulaire 40i coopérant avec le siège de clapet 28a.

Les deux inserts 46 et 46' sont bien sûr concentriques, et ménagent entre eux la zone annulaire intermédiaire 50 déformable, située approximativement en arrière de l'espace 35 entre les deux sièges de clapet 20a et 28a, et qui procure l'élasticité désirée à la face avant annulaire 40.

Ainsi, dans l'hypothèse d'une mise en biais, au repos, du plongeur 28 dans l'alésage 26, la zone annulaire 40i sera naturellement appliquée, grâce à l'élasticité de la zone intermédiaire 50, en appui étanche sur le siège de clapet 28a, quel que soit l'angle que forme le plan contenant le siège 28a avec l'axe X-X', et sans qu'il soit besoin d'exercer une contrainte élevée par l'intermédiaire du ressort 42.

Lors d'une action de freinage, le conducteur du véhicule appuie sur la pédale de frein pour faire avancer la tige de commande 30. Le plongeur 28 coulisse dans l'alésage 26, en adoptant une position angulaire quelconque dans cet alésage. Dans ces conditions de fonctionnement, la distance axiale entre le siège de clapet 20a et la zone annulaire 40e diminue, et si l'axe du plongeur n'est pas colinéaire ou parallèle à l'axe X-X' du servomoteur, alors une portion angulaire de la zone 40e vient d'abord en butée sur le siège de clapet 20a alors que la portion angulaire diamétralement opposée de la zone 40e n'est pas encore au contact du siège de clapet 20a.

Le plongeur 28 continuant d'avancer dans l'alésage 26, toute la zone 40e vient alors en contact étanche du siège de clapet 20a, même si ce dernier n'est pas situé dans un plan parallèle à celui du siège de clapet 28a, grâce à l'élasticité du clapet 36, et en particulier de la zone annulaire 50, tandis que la zone annulaire 40i reste appliquée de façon étanche sur le siège de clapet 28a. Une telle élasticité, ou plus précisément une déformabilité de la face avant 40, est permise par le fait que les inserts 46 et 46' ne renforcent la face avant annulaire 40 que dans les zones annulaires 40e et 40i, la zone annulaire 50 se déformant progressivement.

A ce stade de fonctionnement, les chambres avant et arrière du servomoteur sont isolées l'une de l'autre. Lorsque le mouvement vers l'avant du plongeur ouvre le passage de valve 28a-40i, il permet la communication entre la chambre arrière 16 et l'espace annulaire 32 par l'espace 35 et le passage 34.

La pression peut ainsi augmenter dans la chambre arrière 16 du servomoteur et créer une différence de pressions sur la paroi mobile 12, engendrant une force d'assistance qui tend à la déplacer vers l'avant, cette force étant transmise à une tige de poussée 48 par une face avant annulaire du piston 20 agissant sur un disque de réaction 49, sur la partie centrale duquel est en appui la face avant du plongeur 28.

On voit donc que la constitution particulière selon la présente invention du clapet 36, de ses inserts 46 et 46' et de sa zone intermédiaire déformable 50 permet ainsi à la face avant annulaire 40 du clapet 36 d'être constamment en appui étanche sur l'un au moins des sièges de valve 20a et/ou 28a, quelle que soit la position angulaire respective du plongeur 28 dans l'alésage 26.

La position dite d'équilibre du servomoteur, dans laquelle les sièges de clapet 20a et 28a coopèrent alternativement ou simultanément avec les zones annulaires 40e et 40i respectivement est ainsi atteinte dans les meilleures conditions possibles, malgré les imperfections inhérentes à la construction du servomoteur. On obtient donc bien un effort de sortie du servomoteur conforme à celui qui est désiré par l'application d'un effort d'entrée prédéterminé.

On a représenté sur les Figures 2 et 2A un second mode de réalisation de la présente invention, applicable à un clapet du type de celui qui est décrit par exemple dans le document WO 94/04403.

Selon ce mode de réalisation, la face avant annulaire 40 est raccordée à la partie arrière 38 par son bord périphérique intérieur, et elle coulisse de façon étanche à l'intérieur de la partie tubulaire 22 par son bord périphérique extérieur 52 formant un joint à lèvre, de sorte qu'elle définit avec la partie arrière 38 une chambre 54.

La face avant annulaire comporte en outre des ouvertures 55 faisant communiquer cette chambre 54 avec l'espace 35 situé entre les sièges de clapet 20a et 28a. Comme dans le mode de réalisation précédent, le clapet 36 est muni d'inserts annulaires rigides 56 et 56' pour renforcer la face avant annulaire 40, l'insert annulaire rigide 56 étant situé axialement en arrière de la seule zone annulaire 40i coopérant avec le siège de clapet 28a, et le second insert rigide annulaire 56' situé axialement en arrière de l'autre zone annulaire 40e coopérant avec le siège de clapet 20a.

Comme dans le mode de réalisation des Figures 1 et 1A, les deux inserts 56 et 56' sont concentriques, et ménagent entre eux la zone annulaire intermédiaire 50 déformable, située approximativement en arrière de l'espace 35 entre les deux sièges de clapet 20a et 28a, et qui procure une élasticité à la face avant annulaire 40 semblable à celle du clapet des Figures 1 et 1A, permettant ainsi aux zones 40e et 40i d'assurer un contact étanche avec les sièges de clapet 20a et 28a, même si ces derniers ne sont pas situés dans des plans parallèles en ménageant une zone intermédiaire déformable 50. De façon avantageuse, les ouvertures 55 seront pratiquées dans la face avant annulaire 40 dans la zone intermédiaire 50, entre les deux inserts 56 et 56', de façon à faciliter la fabrication de l'élément de clapet 36, l'autre zone annulaire 40i n'étant renforcée par aucun insert, et étant sollicitée vers l'avant par le ressort de clapet 42.

Ainsi, comme dans le mode de réalisation précédent, dans l'hypothèse où le plongeur 28 se met de biais dans l'alésage 26, la zone annulaire 40i est appliquée, grâce à l'élasticité de la zone annulaire intermédiaire 50, en appui étanche sur le siège de clapet 28a, quel que soit l'angle que forme le plan contenant le siège 28a avec l'axe X-X', et sans qu'il soit besoin d'exercer une contrainte élevée par l'intermédiaire du ressort 42.

Comme on l'a vu plus haut, lors d'une action de freinage, le plongeur 28 avance en coulissant dans l'alésage 26, et en partant d'une position angulaire quelconque dans cet alésage. Lors de ce mouvement, la distance axiale entre le siège de clapet 20a et la zone annulaire 40e diminue, et si l'axe du plongeur n'est pas colinéaire ou parallèle à l'axe X-X' du servomoteur, alors une portion angulaire de la zone 40e vient d'abord en butée sur le siège de clapet 20a alors que la portion angulaire diamétralement opposée de la zone 40e n'est pas encore au contact du siège de clapet 20a.

Le plongeur 28 continuant d'avancer dans l'alésage 26, toute la zone annulaire 40e vient alors en contact étanche du siège de clapet 20a, même si ce dernier n'est pas situé dans un plan parallèle à celui du siège de clapet 28a, grâce à l'élasticité du clapet 36, permise par le fait que les inserts 56 et 56' ne renforcent la face avant annulaire 40 que dans les zones annulaires 40i et 40e, et par le fait que la zone annulaire intermédiaire 50 se déforme progressivement.

On voit donc que, dans ce mode de réalisation également, la constitution particulière selon la présente invention du clapet 36, de ses inserts 56 et 56' et de sa zone intermédiaire déformable 50 permet ainsi à la face avant annulaire 40 du clapet 36 d'être constamment en appui étanche sur l'un au moins des sièges de valve 20a et/ou 28a, quelle que soit la position angulaire respective du plongeur 28 dans l'alésage 26.

Bien entendu, l'invention n'est pas limitée aux modes de réalisation qui ont été décrits, mais elle est susceptible au contraire de recevoir de nombreuses modifications qui apparaîtront à l'homme du métier. C'est ainsi, par exemple, que l'invention est applicable de la même façon à des servomoteurs de type tandem ou à chambres additionnelles.

## Revendications

1. Servomoteur pneumatique d'assistance au freinage, comportant une enveloppe (10) possédant un axe de symétrie (X-X'), séparée de façon étanche par au moins une structure de paroi mobile (12) en une chambre avant (14) reliée en permanence à une source de basse pression, et une chambre arrière (16) reliée sélectivement à la chambre avant (14) ou à une source de haute pression par un moyen de valve à trois voies (36) actionnée par une tige de commande (30) susceptible de s'appuyer, par l'intermédiaire de la face avant d'un plongeur (28), sur la face arrière d'une tige de poussée (48) solidaire d'un disque de réaction (49), le plongeur (28) coulissant dans un alésage (26) de la paroi mobile (12), la valve à trois voies (36) comportant un élément de clapet (36) disposé dans une partie arrière tubulaire (22) de la paroi mobile (12) et coopérant par une première zone annulaire (40i) d'une face avant annulaire (40) avec un premier siège annulaire de clapet (28a) formé sur le plongeur (28) et par une seconde zone annulaire (40e) de la face avant annulaire (40) avec un second siège annulaire de clapet (20a) formé sur la paroi mobile (12), le premier siège de clapet (28a) étant concentrique au second siège de clapet (20a) et de diamètre inférieur, la face avant annulaire (40) de l'élément de clapet étant sollicitée en direction des sièges annulaires de clapet (20a,28a) par un ressort de clapet (42) et étant renforcée par un insert annulaire rigide (46';56) situé axialement en arrière de la première zone annulaire (40i) par lesquelles la face avant annulaire (40) de l'élément de clapet (36) coopère avec le premier siège annulaire de clapet (28a), caractérisé en ce que la face avant annulaire (40) de l'élément de clapet (36) est renforcée par un second insert annulaire rigide (46;56') situé axialement en arrière de la seconde zone annulaire (40e) de la face avant annulaire (40) de l'élément de clapet (36) coopérant avec le second siège annulaire de clapet (20a) et comporte une zone annulaire intermédiaire élastiquement déformable (50) située entre les première (40i) et seconde (40e) zones annulaires par lesquelles la face avant annulaire (40) de l'élément de clapet (36) coopère avec les sièges annulaires de clapet (20a,28a).

2. Servomoteur pneumatique selon la revendication 1, caractérisé en ce que la face avant annulaire (40) du clapet (36) comporte en outre au moins une ouverture (55) faisant communiquer une chambre (54) située derrière la face avant annulaire (40) du clapet (36) avec un espace (35) situé entre les premier (28a) et second (20a) sièges de clapet.

3. Servomoteur pneumatique selon la revendication 2, caractérisé en ce que les ouvertures (55) sont pratiquées dans la face avant annulaire (40) dans la zone intermédiaire déformable (50) entre les deux inserts annulaires rigides (56,56').

## Patentansprüche

1. Pneumatischer Servomotor zur Bremsunterstützung, mit einem Gehäuse (10), das eine Symmetrieachse (X-X') besitzt und in dichter Weise durch zumindest eine bewegliche Wandstruktur (12) in eine permanent mit einer Unterdruckquelle verbundene vordere Kammer (14) und eine hintere Kammer (16) unterteilt ist, die selektiv mit der vorderen Kammer (14) oder einer Hochdruckquelle mittels eines Dreiwegeventils (36) verbunden ist, das von einer Steuerstange (30) betätigt wird, welche in der Lage ist, sich über die Vorderseite eines Tauchkolbens (28) an der Hinterseite einer fest mit einer Reaktionsscheibe (49) verbundenen Schubstange (48) abzustützen, wobei der Tauchkolben (28) in einer Bohrung (26) der beweglichen Wandung (12) gleitet, wobei das Dreiwegeventil (36) ein Ventilelement (36) enthält, das in einem rohrförmigen hinteren Abschnitt (22) der beweglichen Wandung (12) angeordnet ist und durch einen ersten Ringbereich (40i) einer ringförmigen Vorderseite (40) mit einem am Tauchkolben (28) gebildeten ersten ringförmigen Ventilsitz (28a) und durch einen zweiten Ringbereich (40e) der ringförmigen Vorderseite (40) mit einem an der beweglichen Wandung (12) gebildeten zweiten ringförmigen Ventilsitz (20a) zusammenwirkt, wobei der erste Ventilsitz (28a) zum zweiten Ventilsitz (20a) konzentrisch ist und einen kleineren Durchmesser aufweist, wobei die ringförmige Vorderseite (40) des Ventilelements durch eine Ventilfeder (42) in Richtung der ringförmigen Ventilsitze (20a, 28a) beaufschlagt ist und durch einen starren Ringeinsatz (46'; 56) verstärkt ist, der sich axial hinter dem ersten Ringbereich (40i) befindet, durch welche die ringförmige Vorderseite (40) des Ventilelements (36) mit dem ersten ringförmigen Ventilsitz (28a) zusammenwirkt, dadurch gekennzeichnet, daß die ringförmige Vorderseite (40) des Ventilelements (36) durch einen zweiten starren Ringeinsatz (46; 56') verstärkt ist, der sich axial hinter dem zweiten Ringbereich (40e) der ringförmigen Vorderseite (40) des Ventilelements (36) befindet, die mit dem ringförmigen zweiten Ventilsitz (20a) zusammenwirkt und einen ringförmigen, elastisch verformbaren Zwischenbereich (50) enthält, der sich zwischen dem ersten Ringbereich (40i) und dem zweiten Ringbereich (40e) befindet, durch welche die ringförmige Vorderseite (40) des Ventilelements (36) mit den ringförmigen Ventilsitzen (20a, 28a) zusammenwirkt.

2. Pneumatischer Servomotor nach Anspruch 1, dadurch gekennzeichnet, daß die ringförmige Vorderseite (40) des Ventilelements (36) weiterhin zumindest eine Öffnung (55) enthält, durch die eine hinter der ringförmigen Vorderseite (40) des Ventilelements (36) befindliche Kammer (54) mit einem zwischen dem ersten Ventilsitz (28a) und dem zweiten Ventilsitz (20a) befindlichen Raum (35) verbunden ist.

3. Pneumatischer Servomotor nach Anspruch 2, dadurch gekennzeichnet, daß die Öffnungen (55) in der ringförmigen Vorderseite (40) im verformbaren Zwischenbereich (50) zwischen den beiden ringförmigen starren Einsätzen (56, 56') vorgesehen sind.

## Claims

1. Pneumatic brake booster including a casing (10) having an axis of symmetry (X-X'), the casing being divided in leaktight fashion by a moving wall structure (12) into a front chamber (14) permanently connected to a source of low pressure, and a rear chamber (16) connected selectively to the front chamber (14) or to a source of high pressure by a three-way valve means (36) actuated by a control rod (30) capable of bearing, via the front face of a plunger (28), on the rear face of a push rod (48) secured to a reaction disk (49), the plunger (28) sliding in a bore (26) of the moving wall (12), the three-way valve (36) including a valve element (36) located in a tubular rear part (22) of the moving wall (12) and interacting via a first annular region (40i) of an annular front face (40) with a first annular valve seat (28a) formed on the plunger (28) and, via a second annular region (40e) of the annular front face (40), with a second annular valve seat (20a) formed on the moving wall (12), the first valve seat (28a) being concentric with the second valve seat (20a) and of smaller diameter, the annular front face (40) of the valve element being urged toward the annular valve seats (20a, 28a) by a valve spring (42) and being reinforced by a rigid annular insert (46'; 56) situated axially behind the first annular region (40i) via which regions the annular front face (40) of the valve element (36) interacts with the first annular valve seat (28a), characterized in that the annular front face (40) of the valve element (36) is reinforced by a second rigid annular insert (46; 56') situated axially behind the second annular region (40e) of the annular front face (40) of the valve element (36) interacting with the second annular valve seat (20a) and includes an elastically deformable intermediate annular region (50) situated between the first (40i) and second (40e) annular regions via which the annular front face (40) of the valve element (36) interacts with the annular valve seats (20a, 28a).

2. Pneumatic booster according to claim 1, characterized in that the annular front face (40) of the valve (36) further includes at least one opening (55) causing a chamber (54) situated behind the annular front face (40) of the valve (36) to communicate with a space (35) situated between the first (28a) and second (20a) valve seat.

3. Pneumatic booster according to claim 2, characterized in that the openings (55) are made in the annular front face (40) in the deformable intermediate region (50) between the two rigid annular inserts (56, 56').
